# EUROPEAN PATENT APPLICATION

(11) **EP 4 560 134 A1**
(43) Date of publication of application: **28.05.2025**
(21) Application number: 24193798.6
(22) Date of filing: 09.08.2024
(51) Int. Cl.: F03D 1/00, F03D 80/60, F03D 80/80

(54) **BOTTOM OUTLET STRUCTURE OF WIND TURBINE GENERATOR AND INSTALLATION METHOD THEREOF**

(30) Priority: 27.11.2023 CN 202311594935; 28.12.2023 CN 202311838009
(71) Applicant: Sany Renewable Energy Co., Ltd., Beijing 102206 (CN); Beijing Sany Smart Electrical Machine Co., Ltd, 102200 Beijing (CN)
(72) Inventor: YANG, Huaiyu, Beijing, 102206 (CN); JIAN, Xiufeng, Beijing, 102206 (CN); MA, Qiang, Beijing, 102206 (CN); KONG, Lingjiang, Beijing, 102206 (CN)
(74) Representative: Monteiro Alves, Inês

(57) **Abstract**

Disclosed are a bottom outlet structure of a wind turbine generator and an installation method thereof. The bottom outlet structure of the wind turbine generator includes a nacelle cover (100) and a heat dissipation assembly (400). A generator (300) of the wind turbine generator is installed in the nacelle cover (100) through a frame (200), a ventilation port (101) is formed at a bottom of the nacelle cover (100), and a first installation position is formed at the ventilation port (101); an accommodation space (201) is formed between the frame (200) and the ventilation port (101), and the accommodation space (201) is provided at intervals below the generator (300); a second installation position is formed on the nacelle cover (100), and the second installation position is accommodated in the accommodation space (201); and the heat dissipation assembly (400) is detachably connected to the first installation position or the second installation position.

## Description

### TECHNICAL FIELD

The present application relates to the technical field of wind turbine generators, and in particular to a bottom outlet structure of a wind turbine generator and an installation method thereof.

### BACKGROUND

The wind turbine generator is a system that converts the kinetic energy of wind into electrical energy. At present, air-cooled generators are often used in megawatt-level wind turbine generators, and the air is used as a cooling medium to cool the stator and rotor windings of the generator and the iron core of the stator.

In related art, air-cooled generators mostly use side or top outlet methods. In the side outlet method, a ventilation port is set on the side or tail of the air-cooled generator, and exhaust is discharged through the ventilation port; in the top outlet method, the ventilation port is set on the top of the generator, a corresponding opening is set in the nacelle cover, and the hot air is discharged through the exhaust hood.

However, as the megawatt of the wind turbine generator increases, the air-cooled generator has an increasing demand for air volume, which requires increasing the size of the cooler on the air-cooled generator to improve the heat dissipation cooling efficiency. However, while increasing the size of the cooler on the air-cooled generator, the height of the wind turbine generator is also increased, which increases the maintenance and repair costs of the wind turbine generator.

### SUMMARY

The main purpose of the present application is to provide a bottom outlet structure of a wind turbine generator and an installation method thereof, aiming to solve the technical problem in related art that in order to meet the heat dissipation cooling requirements of the wind turbine generator, increasing the size of the cooler on the air-cooled generator will increase the maintenance and repair costs of the wind turbine generator.

To achieve the above purpose, the present application adopts the following technical solutions.

According to a first aspect, the present application provides a bottom outlet structure of a wind turbine generator, including: a nacelle cover and a heat dissipation assembly;
a generator of the wind turbine generator is installed in the nacelle cover through a frame, a ventilation port is formed at a bottom of the nacelle cover, a first installation position is formed at the ventilation port, an accommodation space is formed between the frame and the ventilation port, the accommodation space is provided at intervals below the generator, a second installation position is formed on the nacelle cover, and the second installation position is accommodated in the accommodation space; and
the heat dissipation assembly is detachably connected to the first installation position or the second installation position.

In an embodiment, the heat dissipation assembly includes a box body and a noise reduction assembly, the box body is detachably connected to the first installation position or the second installation position, the box body is formed with a ventilated side and a noise reduction side, and the noise reduction assembly is installed on the noise reduction side.

In an embodiment, the box body includes a grid assembly and a plate assembly, the grid assembly and the plate assembly are enclosed to form a heat dissipation cavity with a top opening, the grid assembly is configured to form the ventilated side, and the plate assembly is configured to form the noise reduction side.

In an embodiment, the grid assembly includes a plurality of shutters, the plate assembly includes a first plate and a second plate, and the first plate and the plurality of shutters are enclosed along a circumference of the second plate to form the heat dissipation cavity.

In an embodiment, the second plate corresponds to the ventilation port, and an orthographic projection of the second plate on the ventilation port is configured to cover the ventilation port.

In an embodiment, an inner wall of the box body is provided with a plurality of reinforcement ribs, and the plurality of reinforcement ribs are crosswise.

In an embodiment, the plurality of the reinforcement ribs are enclosed to form a plurality of installation spaces, and each of the installation spaces is provided with the noise reduction assembly.

In an embodiment, the noise reduction assembly includes a plurality of noise reduction layers laid on the noise reduction side.

In an embodiment, the frame includes a chassis installed in the nacelle cover, the generator is installed on the chassis, and the accommodation space is formed between the chassis and the ventilation port.

In an embodiment, the heat dissipation assembly includes a shell and a motor rotor, the shell is formed with a heat dissipation duct, the motor rotor includes a rotating shaft rotatably installed on the shell and an iron core fixedly installed on the rotating shaft, and the iron core is provided on the heat dissipation duct; and

the heat dissipation duct is formed with a wind outlet, and the wind outlet is provided at a lower end of the shell and corresponds to a side of the iron core, so that the airflow is configured to flow downward out of the heat dissipation duct.

In an embodiment, the heat dissipation duct is further formed with a first wind inlet, and the first wind inlet is provided at an upper end of the shell and corresponds to an end of the iron core, so that the airflow is configured to flow downward into the heat dissipation duct.

In an embodiment, two first wind inlets are provided corresponding to two ends of the iron core.

In an embodiment, the heat dissipation assembly further includes a filter apparatus, and the filter apparatus includes: a filter seat including a seat body and a separating plate and a plurality of filters;
the seat body is fixedly installed on the upper end of the shell, the separating plate is provided in the seat body to form two filter channels with the seat body, outlets of the two filter channels are respectively communicated with the two first wind inlets, and inlets of the two filter channels are respectively provided on side walls of the seat body; and
the plurality of filters respectively provided in the two filter channels.

In an embodiment, the heat dissipation duct is further formed with a second wind inlet, and the second wind inlet is provided on a side wall of the shell and corresponds to the end of the iron core, so that the airflow is configured to flow into the heat dissipation duct along a radial direction of the motor rotor.

In an embodiment, the heat dissipation assembly further includes an axial fan fixedly installed on the rotating shaft; and/or
the heat dissipation assembly includes an airflow guiding cover provided in the shell.

In an embodiment, the heat dissipation assembly further includes two heat dissipation ports provided at the lower end of the shell, and the two heat dissipation ports respectively correspond to the two ends of the iron core.

In an embodiment, the heat dissipation assembly further includes: a nacelle and a communicating hose;
an air outlet is provided at a lower end of the nacelle, and the shell is provided in the nacelle; and
two ends of the communicating hose are respectively communicated with the air outlet and the wind outlet.

In an embodiment, the heat dissipation assembly further includes an elbow head provided at the air outlet and configured for allowing the airflow to flow out in a horizontal direction.

According to a second aspect, the present application also provides a method for installing a bottom outlet structure of a wind turbine generator, applied to the bottom outlet structure of the wind turbine generator, including:
placing a heat dissipation assembly in an accommodation space, and detachably connecting the heat dissipation assembly to a second installation position;
transporting a nacelle cover to a preset location;
removing the heat dissipation assembly from the second installation position, and installing the heat dissipation assembly to a first installation position; and
passing an air duct through a ventilation port, and communicating an exhaust end of a generator with the heat dissipation assembly through the air duct to complete an installation.

One or more of the above technical solutions provided by the present application may have the following advantages or at least achieve the following technical effects:

The present application provides a bottom outlet structure of a wind turbine generator and an installation method thereof. A ventilation port is formed at the bottom of the nacelle cover, a first installation position is formed at the ventilation port of the nacelle cover, and a second installation position is formed in the accommodation space inside the nacelle cover. When the generator needs to be heat dissipated, the heat dissipation assembly is installed at the first installation position, and the heat dissipation assembly is communicated with the exhaust end of the generator, so that the hot air exhausted by the generator is diffused to the external environment through the heat dissipation assembly, increasing the heat dissipation area, thereby improving the heat dissipation effect of the generator without increasing the size of the generator cooler, avoiding the increase in the height of the wind turbine generator, reducing the transportation cost and transportation difficulty of the wind turbine generator, and preventing the increase in the maintenance and repair cost of the wind turbine generator. In addition, through the first installation position and the second installation position, the heat dissipation assembly can be stored in the second installation position during transportation, which improves the utilization rate of the internal space of the nacelle cover. When the heat dissipation assembly is used again, there is no need to set up an additional connection device. It only needs to adjust the heat dissipation assembly from the second installation position to the first installation position, so that the heat dissipation assembly is effectively protected during the transportation process and the connection between the heat dissipation assembly and the nacelle cover is easier to operate.

### BRIEF DESCRIPTION OF THE DRAWINGS

In order to illustrate the technical solutions in the embodiments of the present application or in the related art more clearly, the following briefly introduces the accompanying drawings required for the description of the embodiments or the related art. Obviously, the drawings in the following description are only part of embodiments of the present application. For those skilled in the art, other drawings can also be obtained according to the structures shown in these drawings without any creative effort.
FIG. 1 is a schematic structural view of a heat dissipation assembly installed in a first installation position according to an embodiment of the present application.
FIG. 2 is a schematic structural view of the heat dissipation assembly installed in a second installation position according to an embodiment of the present application.
FIG. 3 is a schematic structural view of a bottom outlet structure of a wind turbine generator according to an embodiment of the present application.
FIG. 4 is a schematic structural view of the heat dissipation assembly according to an embodiment of the present application.
FIG. 5 is a flowchart of an installation method of the bottom outlet structure of the wind turbine generator according to an embodiment of the present application.
FIG. 6 is a schematic cross-sectional structural view of the heat dissipation assembly according to an embodiment of the present application.
FIG. 7 is a schematic side-view structural view of the heat dissipation assembly in FIG. 6.

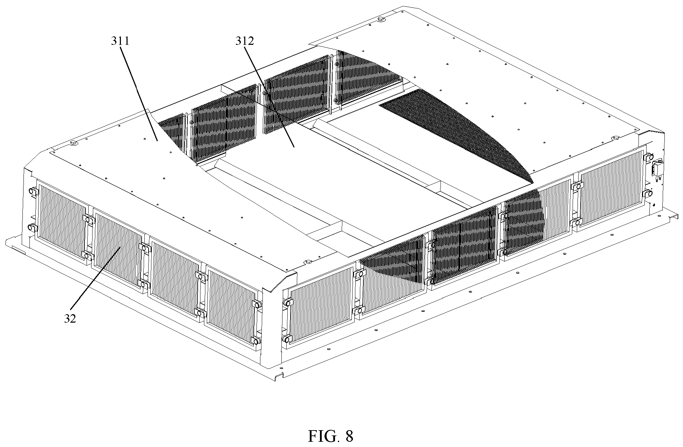

FIG. 8 is a schematic three-dimensional structural view of a filter apparatus in FIG. 6.

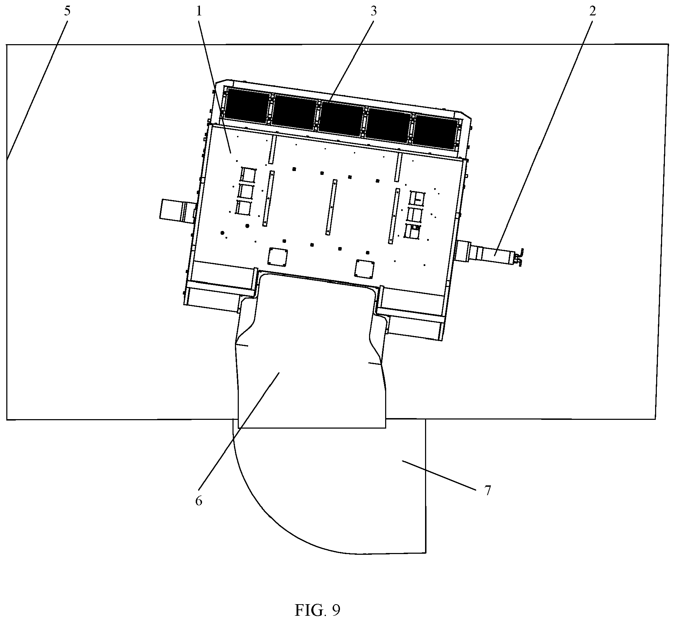

FIG. 9 is a schematic side-view structural view of the heat dissipation assembly (including a nacelle) in FIG. 6.

### Reference signs in accompanying drawings

| Reference sign | Name | Reference sign | Name |
|---|---|---|---|
| 100 | nacelle cover | 200 | frame |
| 300 | generator | 400 | heat dissipation assembly |
| 500 | reinforcement rib | 600 | air duct |
| 101 | ventilation port | 201 | accommodation space |
| 410 | box body | 420 | noise reduction assembly |
| 411 | grid assembly | 412 | plate assembly |
| 413 | heat dissipation cavity | 401 | shutter |
| 402 | first plate | 403 | second plate |
| 501 | installation space | 421 | noise reduction layer |
| 210 | chassis | 3 | filter apparatus |
| 1 | shell | 31 | filter seat |
| 11 | heat dissipation duct | 311 | seat body |
| 12 | wind outlet | 312 | separating plate |
| 13 | first wind inlet | 32 | filter |
| 14 | second wind inlet | 4 | axial fan |
| 15 | heat dissipation port | 5 | nacelle |
| 2 | motor rotor | 6 | communicating hose |
| 21 | rotating shaft | 7 | elbow head |
| 22 | iron core | 8 | airflow guiding cover |

The realization of the objective, functional characteristics, and advantages of the present application are further described with reference to the accompanying drawings.

### DETAILED DESCRIPTION OF THE EMBODIMENTS

In order to illustrate the purpose, technical solutions and advantages of the present application, the following briefly introduces the accompanying drawings required for the description of the embodiments. Obviously, the embodiments in the following description are only part of the present application. All other embodiments obtained by those skilled in the art based on the embodiments of the present application without creative efforts shall fall within the scope of the present application.

It should be noted that all directional indications, such as up, down, left, right, front, back, etc, involved in the embodiments of the present application are only used to explain the relative position relationship and motion between the components in a specific attitude (as shown in the accompanying figure). If the specific posture changes, the directional indication also changes accordingly.

In the present application, the term "include", "comprise" or any other variation thereof is intended to cover non-exclusive inclusion, so that a process, method, article or system including a set of elements includes not only those elements but also other elements not expressly listed or that are inherent to such process, method, article or system. In the absence of further restrictions, the element defined by the sentence "including..." does not preclude the existence of additional identical elements in the process, method, article, or system including the element. Besides, the meaning of "and/or" appearing in the present application includes three parallel scenarios. For example, "A and/or B" includes only A, or only B, or both A and B.

In the present application, unless otherwise specified and limited, the terms "connecting" and "fixing" should be understood in a broad sense, for example, it can be a fixed connection, a detachable connection, integrally connected, mechanically connected, electrically connected, directly connected or indirectly connected through an intermediary, and it can be the internal connectivity of two components or the interaction between two components.

In the present application, if there are descriptions related to "first", "second", etc. in the embodiments of the present application, the descriptions of "first", "second", etc. are only for the purpose of description, and should not be construed as indicating or implying relative importance or implicitly indicates the number of technical features indicated. Thus, a feature delimited with "first", "second" may expressly or implicitly include at least one of that feature.

In the present application, suffixes such as "module", "component", "member", "assembly" or "unit" used to denote a component are only used to facilitate the description of the present application and have no specific meaning in themselves. Thus, the terms "module", "component" or "unit" can be used in combination.

Those skilled in the art can understand the specific meanings of the above terms in the present application according to specific situations. In addition, the technical solutions between the various embodiments can be combined with each other, but must be based on the realization by those skilled in the art. When the combination of technical solutions is contradictory or cannot be realized, it should be considered that the combination of such technical solutions does not exist or fall within the scope of protection claimed in the present application.

The inventive concept of the present application is further described below in combination with some specific implementation methods.

The present application provides a bottom outlet structure of a wind turbine generator and an installation method thereof.

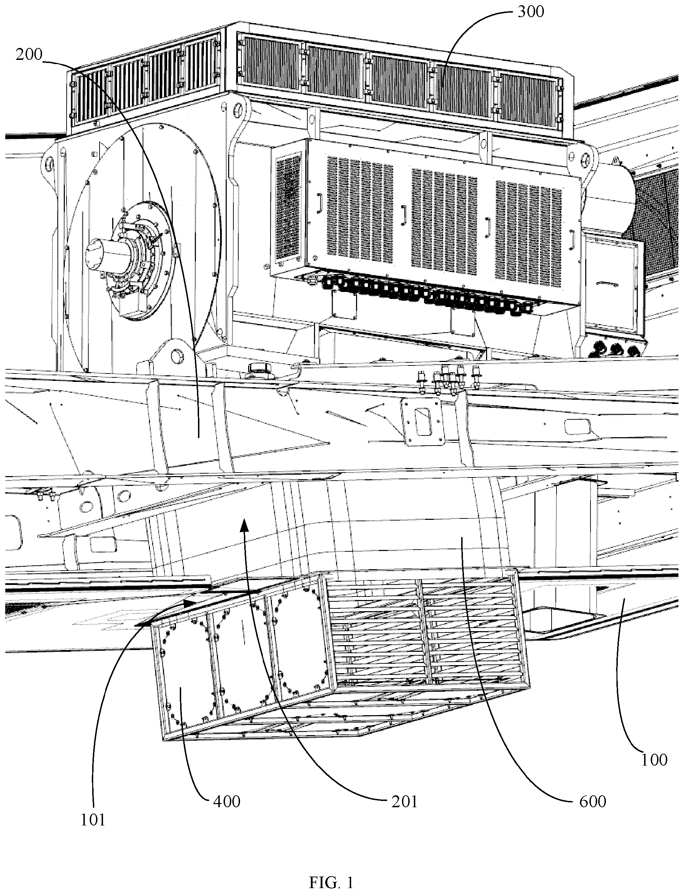

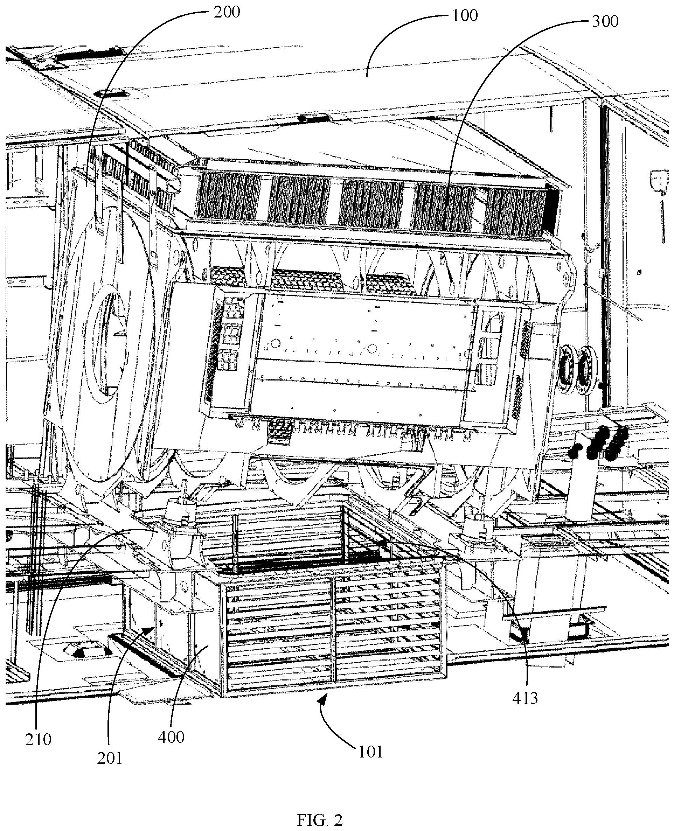

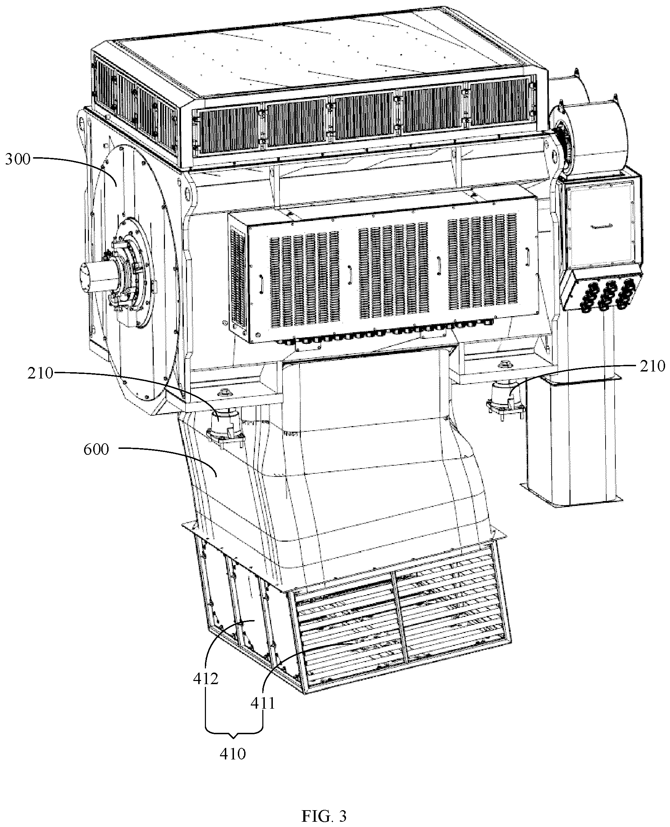

Referring to FIG. 1 to FIG. 3, FIG. 1 is a schematic structural view of a heat dissipation assembly installed in a first installation position according to an embodiment of the present application. FIG. 2 is a schematic structural view of the heat dissipation assembly installed in a second installation position according to an embodiment of the present application. FIG. 3 is a schematic structural view of a bottom outlet structure of a wind turbine generator according to an embodiment of the present application.

In an embodiment of the present application, as shown in FIG. 1 to FIG. 3, the bottom outlet structure of the wind turbine generator includes a nacelle cover 100 and a heat dissipation assembly 400. A generator 300 in the wind turbine generator is installed in the nacelle cover 100 through a frame 200, a ventilation port 101 is formed at the bottom of the nacelle cover 100, and a first installation position is formed at the ventilation port 101. An accommodation space 201 is formed between the frame 200 and the ventilation port 101, and the accommodation space 201 is provided below the generator 300. A second installation position is formed on the nacelle cover 100, and the second installation position is accommodated in the accommodation space 201. The heat dissipation assembly 400 is detachably connected to the first installation position or the second installation position.

It should be noted that the size of the heat dissipation assembly 400 is determined according to the size of the accommodation space 201, so that the heat dissipation assembly 400 can be completely accommodated in the accommodation space 201 when detachably connected to the second installation position, and there is no need to set up a shell for protecting the heat dissipation assembly 400, thereby reducing the transportation cost of the wind turbine generator, and ensuring that the heat dissipation assembly 400 can be protected by the nacelle cover 100 during the transportation process of the wind turbine generator 300, so as to avoid the heat dissipation assembly 400 from being damaged by collision. The generator 300 can be an air-cooled motor in the related art.

It should be understood that during the transportation of the generator 300 and the heat dissipation assembly 400, the heat dissipation assembly 400 is detachably connected to the second installation position. Before the generator 300 is used, the heat dissipation assembly 400 is removed from the second installation position, and the heat dissipation assembly 400 is installed on the outer side of the bottom of the nacelle cover 100 corresponding to the ventilation port 101. The heat dissipation assembly 400 is connected to the exhaust end of the generator 300 through the air duct 600, so that the hot air is diffused to the external environment by the exhaust end of the generator 300 through the heat dissipation assembly 400, thereby improving the heat dissipation effect of the generator 300.

In an embodiment, a ventilation port 101 is formed at the bottom of the nacelle cover 100, and an installation hole is formed at the bottom of the nacelle cover 100 along the circumference of the ventilation port 101. When the heat dissipation assembly 400 is located in the first installation position, the top of the heat dissipation assembly 400 is connected to the installation hole through a bolt. When the heat dissipation assembly 400 is located in the second installation position, the bottom of the heat dissipation assembly 400 is connected to the installation hole through the bolt. In this embodiment, it only needs to form an installation hole at the position corresponding to the ventilation port 101 at the bottom of the nacelle cover 100 to meet the connection between the heat dissipation assembly 400 and the first installation position or the second installation position, and there is no need to set connection conditions according to the first installation position and the second installation position respectively, which reduces the production cost of the bottom outlet structure of the wind turbine generator and makes the connection between the heat dissipation assembly 400 and the nacelle cover 100 easier to operate.

It should be noted that due to the height limit requirement of the road, the heat dissipation assembly 400 is configured to perform heat dissipation, so that the size of the cooler of the generator 300 does not need to be increased, thereby avoiding the increase in the height of the wind turbine generator. When transporting the wind turbine generator, the heat dissipation assembly 400 can be accommodated in the accommodation space 201 and detachably connected to the second installation position, so that the generator 300 and the heat dissipation assembly 400 can be transported together, simplifying the transportation operation process of the wind turbine generator, and limiting the size of the wind turbine generator to less than 5m, meeting the height limit requirement of the road, thereby further reducing the transportation cost of the wind turbine generator and reducing the difficulty of transporting the wind turbine generator.

In the technical solution of the present application, the ventilation port 101 is formed at the bottom of the nacelle cover 100, the first installation position is formed at the ventilation port 101 of the nacelle cover 100, and the second installation position is formed in the accommodation space 201 in the nacelle cover 100. When the heat dissipation of the generator 300 is required, the heat dissipation assembly 400 is installed at the first installation position, and the heat dissipation assembly 400 is connected with the exhaust end of the generator 300, so that the hot air exhausted by the generator 300 is diffused to the external environment through the heat dissipation assembly 400, thereby increasing the heat dissipation area, improving the heat dissipation effect of the generator 300 without increasing the size of the cooler of the generator 300, avoiding the increase in the height of the wind turbine generator, reducing the transportation cost and transportation difficulty of the wind turbine generator, and preventing the increase in the maintenance and repair cost of the wind turbine generator. In addition, through the first installation position and the second installation position, the heat dissipation assembly 400 can be accommodated in the second installation position in the transportation state, thereby improving the utilization rate of the internal space of the nacelle cover 100. When the heat dissipation assembly 400 is used again, there is no need to provide an additional connecting device, and the heat dissipation assembly 400 only needs to be adjusted from the second installation position to the first installation position, so that the heat dissipation assembly 400 is effectively protected in the transportation process and the connection between the heat dissipation assembly 400 and the nacelle cover 100 is easier to operate.

Referring to FIG. 1 to FIG. 3 and FIG. 4, FIG. 4 is a schematic structural view of the heat dissipation assembly according to an embodiment of the present application.

In an embodiment, as shown in FIG. 1 to FIG. 4, the heat dissipation assembly 400 includes a box body 410 and a noise reduction assembly 420. The box body 410 is detachably connected to the first installation position or the second installation position, the box body 410 is formed with a ventilated side and a noise reduction side, and the noise reduction assembly 420 is installed on the noise reduction side.

It should be noted that the noise reduction side is an L-shaped structure, the ventilated side is a non-integral ring structure, and the noise reduction side and the ventilated side are enclosed to form a box body 410 with a top opening. The noise reduction assembly 420 installed on the noise reduction side is located in the box body 410.

It should be understood that, when the box body 410 is detachably connected to the first installation position, the opening at the top of the box body 410 is connected to the exhaust end of the generator 300 through the air duct 600, and the air duct 600 is penetrated in the ventilation port 101. In the process of discharging the hot air to the box body 410 by the generator 300, the noise reduction side guides the heat dissipation path of the hot air, that is, the hot air is first blocked by the noise reduction side and then diffused in the box body 410, and is discharged through the ventilated side. That is, compared with the heat dissipation method of only using the ventilated side to diffuse the hot air, the noise reduction side diffuses the hot air once before the ventilated side diffuses the hot air, so that the hot air diffuses more evenly in the box body 410, and the diffused hot air is more conducive to uniform discharge from the ventilated side, thereby improving the heat dissipation effect of the heat dissipation assembly 400 to the generator 300. In addition, the noise reduction assembly 420 on the noise reduction side can also reduce the noise generated when the hot air blows to the noise reduction side, and also avoids the direct impact of the hot air on the noise reduction side when blowing into the box body 410 to cause the noise reduction side to vibrate and generate noise, thereby reducing the impact of the generator 300 on the external environment, that is, the natural environment.

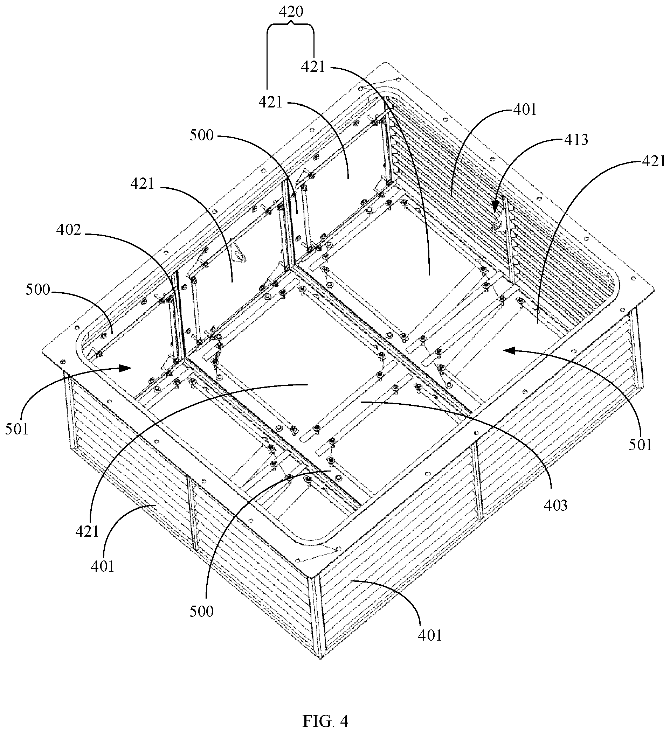

In an embodiment, as shown in FIG. 4, the box body 410 includes a grid assembly 411 and a plate assembly 412, and the grid assembly 411 and the plate assembly 412 are enclosed to form a heat dissipation cavity 413 with a top opening. A ventilated side is formed at the grid assembly 411, and a noise reduction side is formed at the plate assembly 412.

It should be noted that the noise reduction assembly 420 is installed on the plate assembly 412, and the noise reduction assembly 420 is provided in the heat dissipation cavity 413.

It should be understood that when the box body 410 is detachably connected to the first installation position, the opening at the top of the heat dissipation cavity 413 is connected to the exhaust end of the generator 300 through the air duct 600. When the generator 300 discharges the hot air into the heat dissipation cavity 413, the plate assembly 412 is configured to guide the heat dissipation path of the hot air, and the grid assembly 411 is configured to discharge the hot air diffused by the plate assembly 412 to the external environment, so as to further improve the heat dissipation effect of the heat dissipation assembly 400 to the generator 300.

In an embodiment, the grid assembly 411 includes a plurality of shutters 401, the plate assembly 412 includes a first plate 402 and a second plate 403, and the first plate 402 and the plurality of shutters 401 are enclosed along the circumference of the second plate 403 to form the heat dissipation cavity 413.

It should be noted that the first plate 402 and the second plate 403 are both airtight plates, and the first plate 402 and the second plate 403 are formed with a noise reduction side with an L-shaped structure.

It should be understood that, since the plurality of shutters 401 and the first plate 402 are enclosed along the circumference of the second plate 403 to form the heat dissipation cavity 413, after the hot air is discharged by the generator 300, when the hot air is sent into the heat dissipation cavity 413 through the air duct 600, the hot air first impacts the second plate 403, and generates a first diffusion under the action of the reaction force to form a first diffusion hot air. A part of the first diffusion hot air directly diffuses through the plurality of shutters 401 located in the circumference of the second plate 403 to form a second diffusion hot air and is discharged to the external environment. Another part of the first diffusion hot air impacts the first plate 402, and forms a third diffusion hot air flowing towards the inside of the heat dissipation cavity 413 under the action of the reaction force. The third diffusion hot air pushes the first diffusion hot air and the second diffusion hot air in the heat dissipation cavity 413 towards the plurality of shutters 401 to be discharged to the external environment, thereby enhancing the fluidity of the hot air in the heat dissipation cavity 413, so that the hot air discharged from the generator 300 is discharged from the heat dissipation cavity 413 after multiple diffusions, and the heat dissipation effect on the generator 300 is ensured by the heat dissipation assembly 400 with a simple structure and low-cost.

It should be noted that the first plate 402 corresponds to the windward side of the generator 300, and is configured to block the natural wind on the windward side from blowing into the heat dissipation cavity 413 to cause the hot air in the heat dissipation cavity 413 to flow in a disordered direction or flow back to the exhaust end of the generator 300, thereby preventing the air in the external environment from affecting the heat dissipation effect of the heat dissipation assembly 400.

In an embodiment, the shutter 401 can be the elbow head in the related art to further save the cost of the heat dissipation assembly 400.

In an embodiment, the second plate 403 corresponds to the ventilation port 101, and the orthographic projection of the second plate 403 on the ventilation port 101 covers the ventilation port 101.

It should be noted that when the heat dissipation assembly 400 is in the first installation position or the second installation position, the second plate 403 is detachably connected to the bottom of the nacelle cover 100 corresponding to the position of the ventilation port 101.

It should be understood that when the heat dissipation assembly 400 is located in the first installation position, the heat dissipation assembly 400 is configured to disperse the hot air discharged through the exhaust end of the generator 300, enhance the fluidity of the hot air in the heat dissipation assembly 400, and ensure the heat dissipation effect of the heat dissipation assembly 400 to the generator 300. When the heat dissipation assembly 400 is located in the second installation position, the heat dissipation assembly 400 blocks the ventilation port 101 to prevent foreign matter from entering the nacelle cover 100 from the ventilation port 101 and colliding with the generator 300 during the transportation process of the wind turbine generator, thereby ensuring the transportation safety of the generator 300.

In an embodiment, the inner wall of the box body 410 is provided with a plurality of reinforcement ribs 500, and the plurality of reinforcement ribs 500 are crosswise.

It should be understood that since the hot air discharged from the generator 300 directly impacts the inner wall of the box body 410 through the air duct 600, in order to prevent the box body 410 from being damaged by the impact under long-term impact and to extend the service life of the box body 410, a plurality of reinforcement ribs 500 are provided on the inner wall of the box body 410. In addition, the plurality of reinforcement ribs 500 also ensure that the inner wall of the box body 410 has sufficient strength to cope with the impact of the hot air, so that the hot air can generate sufficient reaction force after impacting the inner wall of the box body 410 and diffuse better. The plurality of reinforcement ribs 500 also improve the structural strength and stability of the box body 410, and ensure the use effect of the heat dissipation assembly 400. The plurality of reinforcement ribs 500 are equivalent to forming a bulge on the inner wall of the box body 410, so that the hot air generates diffuse reflection in the heat dissipation space, thereby improving the diffusion effect of the heat dissipation cavity 413 to the hot air.

In an embodiment, as shown in FIG. 4, the plurality of reinforcement ribs 500 are enclosed to form a plurality of installation spaces 501, and the noise reduction assembly 420 is provided in each of the installation spaces 501.

It should be noted that the plurality of installation spaces formed by the plurality of reinforcement ribs 500 provide stable installation conditions for the noise reduction assembly 420.

It should be understood that the thickness of the noise reduction assembly 420 is less than the depth of installation space 501, so that part of the hot air discharged by generator 300 impacts the reinforcement rib 500, and the other part of the hot air impacts the noise reduction assembly 420, preventing the hot air discharged by the generator 300 from directly and massively impacting the noise reduction assembly 420 and causing the noise reduction assembly 420 to loosen, thereby ensuring the stability of the noise reduction assembly 420 and the noise reduction effect of the noise reduction assembly 420.

In an embodiment, the noise reduction assembly 420 includes a plurality of noise reduction layers 421, and the plurality of noise reduction layers 421 are laid on the noise reduction side.

It should be noted that the noise reduction layer 421 may be a sound-absorbing cotton in the related art.

It should be understood that the thickness of the noise reduction layer 421 is less than the depth of the installation space 501, and the noise reduction layer 421 is accommodated in the installation space 501, so that only the surface of the noise reduction layer 421 is exposed in the heat dissipation cavity 413, thereby ensuring the sound absorption effect of the noise reduction layer 421. The noise reduction layer 421 prevents the hot air from directly impacting the inner wall of the heat dissipation cavity 413 to generate noise, and the noise reduction layer 421 also alleviates the vibration generated by the inner wall of the heat dissipation cavity 413, thereby reducing the noise when the heat dissipation assembly 400 performs the heat dissipation function.

In an embodiment, in order to facilitate the installation of the noise reduction layer 421, a pressing stripe is also pressed on each of the reinforcement ribs 500, and the pressing stripe is configured to press the noise reduction layer 421 on one side of the first plate 402 and the second plate 403 located in the heat dissipation cavity 413.

In an embodiment, the frame 200 includes a chassis 210 installed in the nacelle cover 100, the generator 300 is installed on the chassis 210, and an accommodation space 201 is formed between the chassis 210 and the ventilation port 101.

It should be noted that the chassis 210 is framed on the side of the ventilation port 101 facing the generator 300, and the accommodation space 201 is framed in the nacelle cover 100.

It should be understood that in the transportation process of the generator 300 and the heat dissipation assembly 400, the dispersing assembly is installed in the second installation position of the accommodation space 201 to improve the utilization rate of the internal space of the nacelle cover 100. The generator 300 is installed on the top of the chassis 210, and the heat dissipation assembly 400 is detachably connected to the second installation position. The chassis 210 separates the generator 300 and the heat dissipation assembly 400, and in the transportation process, the heat dissipation assembly 400 is prevented from being damaged by collision and friction with the generator 300, and the chassis 210 provides a stable installation environment for the generator 300.

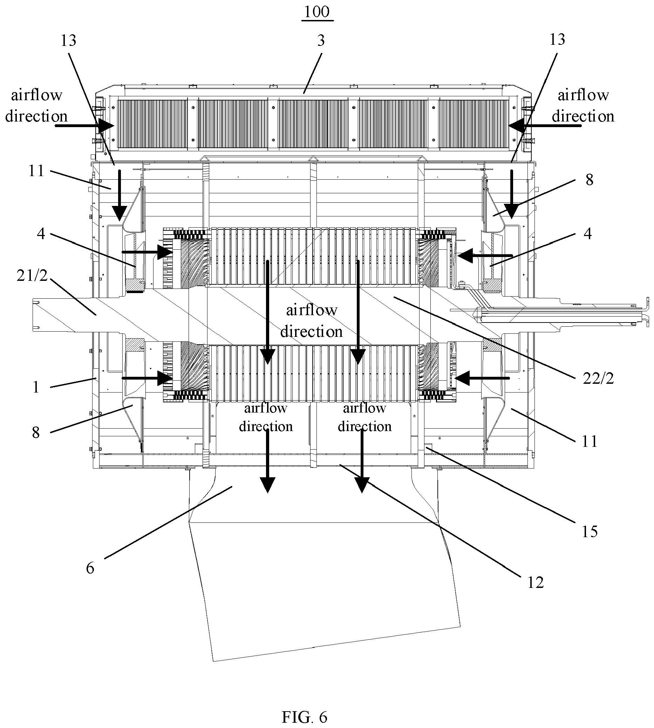

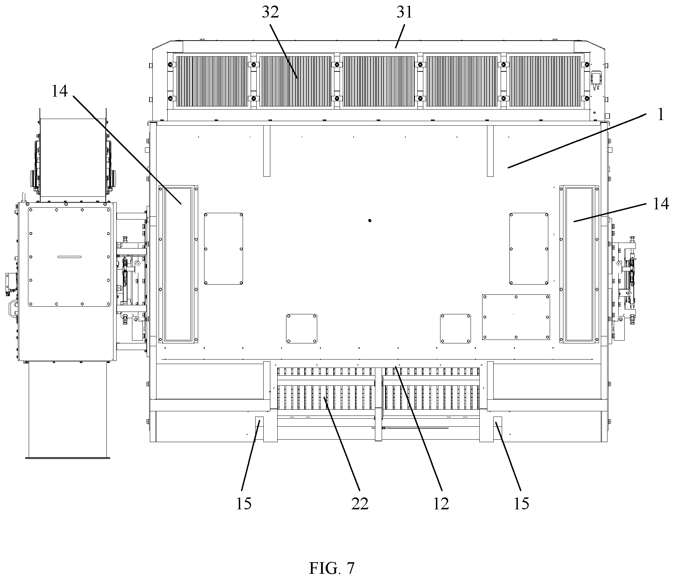

Referring to FIG. 6 and FIG. 7, the heat dissipation assembly 400 includes a shell 1 and a motor rotor 2, and the shell 1 is formed with a heat dissipation duct 11. The motor rotor 2 includes a rotating shaft 21 rotatably installed on the shell 1 and an iron core 22 fixedly installed on the rotating shaft 21. The iron core 22 is provided on the heat dissipation duct 11, the heat dissipation duct 11 is formed with an wind outlet 12, the wind outlet 12 is provided at the lower end of the shell 1 and corresponds to the side of the iron core 22, so that the airflow can flow downward out of the heat dissipation duct 11.

In the technical solution of the present application, the motor rotor 2 is rotatably installed in the shell 1 to form the heat dissipation duct 11 with the shell 1, so as to perform heat dissipation to the motor rotor 2. The wind outlet 12 is provided at the lower end of the shell 1 so that the air flow can flow downward out of the heat dissipation duct 11, so as to reduce the air inlet height of the doubly-fed machine. In this way, the wind outlet 12 is provided at the lower end of the shell 1, and the doubly-fed machine can utilize the rotation of the motor rotor 2, so that the air in the heat dissipation duct 11 can flow directly out from the lower end of the shell 1, and the doubly-fed machine can directly perform heat dissipation, avoiding the need to additionally set up a cooler to cool the doubly-fed machine, so as to reduce the height of the heat dissipation assembly 400, thereby solving the problem that the existing direct-cooling doubly-fed generator cannot be installed on the nacelle 5 due to road height restrictions.

It can be understood that the wind outlet 12 has a variety of shapes, such as round or rhombus-shaped, which is not limited in the present application. Specifically, in the present embodiment, the wind outlet 12 is provided in a rectangular shape to match the shape of the shell 1, which is conducive to expanding the opening of the wind outlet 12, thereby improving the air outlet range of the heat dissipation assembly 400.

In some embodiments of the present application, the heat dissipation duct 11 is further formed with a first wind inlet 13 provided at the upper end of the shell 1 and corresponds to the end of the iron core 22, so that the airflow can flow downward into the heat dissipation duct 11. In this way, the first wind inlet 13 is provided at the upper end of the shell 1 so that air can enter from the upper end of the shell 1, which can effectively utilize the space of the shell 1 and facilitate the subsequent setting of the filter apparatus 3, thereby improving the space utilization rate of the heat dissipation assembly 400.

Furthermore, the number of the air inlets is not limited, and may be one or more, which is not limited in the present application. Specifically, in the present embodiment, two first wind inlets 13 are provided corresponding to the two ends of the iron core 22 respectively. Thus, by providing the two first wind inlets 13, air can be introduced from both ends of the iron core 22 at the same time, which can increase the air intake and simultaneously heat dissipate both ends of the iron core 22, so as to avoid local overheating of both ends of the iron core 22, thereby helping to improve the heat dissipation effect of the heat dissipation assembly 400.

In some embodiments of the present application, the heat dissipation assembly 400 further includes a filter apparatus 3. The filter apparatus 3 includes a filter seat 31 and a plurality of filters 32, the filter seat 31 includes a seat body 311 and a separating plate 312. The seat body 311 is fixedly installed on the upper end of the shell 1, and the separating plate 312 is provided in the seat body 311 to form two filter channels with the seat body 311. The outlets of the two filter channels are respectively communicated with the two first wind inlets 13, the inlets of the two filter channels are respectively provided on the side walls of the seat body 311, and the plurality of filters 32 are respectively provided in the two filter channels. In this way, by setting the separating plate 312, two independent filter channels are formed to respectively supply air to the two first wind inlets 13 to prevent the two filter channels from cross-flowing, and by setting the plurality of filters 32, the gas flowing into the installation seat is filtered to prevent external impurities from entering the heat dissipation duct 11. Further, a plurality of filter duct inlets are provided, and the plurality of filter duct inlets are provided at intervals along the circumference of the seat body 311. The plurality of filters 32 are respectively provided at the plurality of filter duct inlets. In this way, by providing the plurality of filter duct inlets, the air intake range of the filter duct is increased, thereby increasing the air intake volume of the filter apparatus 3.

There are many ways of connecting the seat body 311 and the shell 1. The seat body 311 may be installed on the shell 1 by welding or by screws, etc., which is not limited in the present application. Specifically, in an embodiment, the seat body 311 is detachably installed on the shell 1, and thus a detachable connection structure is adopted to facilitate the assembly and disassembly of the filter apparatus 3, which facilitates the subsequent cleaning of the filter apparatus 3. It can be understood that there are many ways of detachable connection, for example, it may be a snap connection structure or a bolt connection structure, etc., which is not limited in the present application. Furthermore, there are multiple ways to connect the separating plate 312 and the seat body 311. The separating plate 312 can be installed on the seat body 311 by bonding or by snapping, etc., which is not limited in the present application.

In some embodiments of the present application, the heat dissipation duct 11 is further formed with a second wind inlet 14 provided on the side wall of the shell 1 and corresponds to the end of the iron core 22, so that the airflow can flow into the heat dissipation duct 11 along the radial direction of the motor rotor 2. Since the first wind inlet 13 may be blocked during use, resulting in the failure of the doubly-fed machine to perform heat dissipation, in this embodiment, the second wind inlet 14 is provided so that when the first wind inlet 13 is blocked, the heat dissipation duct 11 can be filled with air from the second wind inlet 14, thereby avoiding the failure of the heat dissipation assembly 400 and affecting the operation of the doubly-fed machine.

In some embodiments of the present application, the heat dissipation assembly 400 further includes an axial fan 4 fixedly installed on the rotating shaft 21. In this way, by providing the axial fan 4, the rotation of the motor rotor 2 is configured to drive the gas flow, which improves the driving force of the motor rotor 2 and the gas flow rate in the heat dissipation duct 11, thereby helping to improve the heat dissipation effect of the heat dissipation assembly 400.

In some embodiments of the present application, the heat dissipation assembly 400 includes a airflow guiding cover 8 provided in the shell 1 to guide the airflow to the end of the iron core 22, so that the airflow flows along the axial direction of the rotating shaft 21 under the drive of the axial fan 4.

It should be noted that, among the above two related technical features: "the heat dissipation assembly 400 also includes an axial fan 4 fixedly installed on the rotating shaft 21", and "the heat dissipation assembly 400 includes a airflow guiding cover 8 provided in the shell 1", either one of them can be set or both can be set. Obviously, setting them both at the same time will have a better effect.

In some embodiments of the present application, the heat dissipation assembly 400 also includes two heat dissipation ports 15 provided at the lower end of the shell 1, and the two heat dissipation ports 15 respectively correspond to the two ends of the iron core 22. Since the coils corresponding to the two ends of the iron core 22 will also generate heat when the doubly-fed machine is running, the heat dissipation port 15 is provided, so that the air flow can flow out from the heat dissipation port 15 through the two ends of the iron core 22, so as to take away the heat of the coils at the two ends of the iron core 22 and prevent the coils at the two ends of the iron core 22 from overheating. Furthermore, the heat dissipation port 15 has a variety of shapes, which may be rectangular or rhombus-shaped, etc., which is not limited in the present application. Specifically, in the present embodiment, the heat dissipation port 15 is provided in a strip shape and extends circumferentially along the rotating shaft 21. Since the heat dissipation port 15 extends along the axial direction, the wind outlet 12 will be communicated with the heat dissipation duct 11 at both ends of the iron core 22, resulting in wind crossflow, which affects the heat dissipation effect of the heat dissipation assembly 400. Therefore, the heat dissipation port 15 extends circumferentially along the rotating shaft 21, which can prevent the wind outlet 12 from being communicated with the heat dissipation duct 11 at both ends of the iron core 22, and can increase the outlet range of the heat dissipation port 15, which helps to improve the heat dissipation effect at both ends of the iron core 22.

In some embodiments of the present application, the heat dissipation assembly 400 further includes a nacelle 5 and a communicating hose 6, and the lower end of the nacelle 5 is provided with an air outlet. The shell 1 is provided in the nacelle 5, and the two ends of the communicating hose 6 are respectively communicated with the air outlet and the wind outlet 12. In this way, by providing the communicating hose 6, the air of the wind outlet 12 can flow out of the nacelle 5, and the vibration between the doubly-fed machine and the nacelle 5 can be absorbed to isolate the doubly-fed machine from the nacelle 5. Further, the communicating hose 6 is detachably installed on the shell 1 and/or the nacelle 5, so that a detachable connection structure is adopted to facilitate the assembly and disassembly of the communicating hose 6 for subsequent maintenance or replacement. It can be understood that there are many detachable connection structures, for example, it can be a snap connection structure and a screw connection structure, etc., which is not limited in the present application.

In some embodiments of the present application, the heat dissipation assembly 400 further includes an elbow head 7 provided at the air outlet, which is configured to allow the airflow to flow out in a horizontal direction. If the airflow flows downward directly from the air outlet, it will cause greater wind noise on the ground. Therefore, the elbow head 7 is provided to change the flow direction of the air so that the air can flow out in a horizontal direction to prevent excessive wind noise on the ground. Further, there are multiple ways of connecting the elbow head 7 and the nacelle 5. The elbow head 7 can be installed on the nacelle 5 by welding or by screws, etc., which is not limited in the present application.

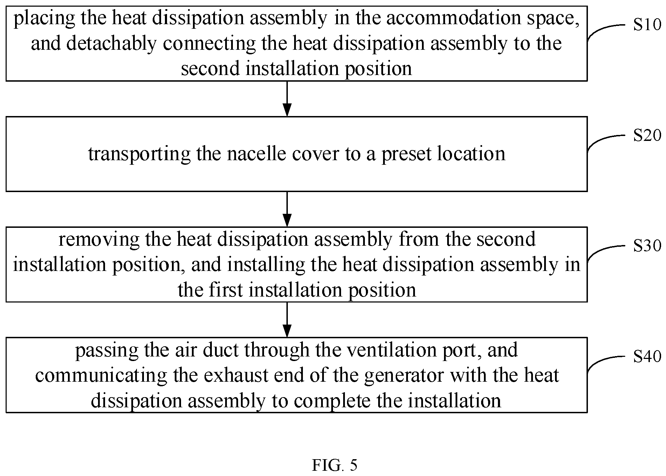

Referring to FIG. 5, FIG. 5 is a flowchart of an installation method of the bottom outlet structure of the wind turbine generator according to an embodiment of the present application.

In addition, based on the same inventive concept, the present application also provides an installation method of the bottom outlet structure of the wind turbine generator.

In this embodiment, as shown in FIG. 1 to FIG. 5, a method for installing a bottom outlet structure of the wind turbine generator is provided, and the bottom outlet structure of the wind turbine generator in the above embodiment is applied. The method includes the following steps:

Step S 10: placing the heat dissipation assembly 400 in the accommodation space 201, and detachably connecting the heat dissipation assembly 400 to the second installation position in the nacelle cover 100, so as to improve the utilization rate of the internal space of the nacelle cover 100.

Step S20: transporting the nacelle cover 100 to a preset location.

Step S30: removing the heat dissipation assembly 400 from the second installation position, and installing the heat dissipation assembly 400 in the first installation position.

Step S40: before hoisting the generator 300 of the wind turbine generator and after passing the air duct 600 through the ventilation port 101, communicating the exhaust end of the generator 300 with the heat dissipation assembly 400 through the air duct 600 to complete the installation.

It should be noted that the air duct 600 is a hose. When the heat dissipation assembly 400 is accommodated in the accommodation space 201, the air duct 600 is folded and placed in the heat dissipation assembly or the accommodation space, so that the air duct 600 can be transported together with the heat dissipation assembly 400 and the generator 300, thereby improving the transportation efficiency.

It should be understood that when the heat dissipation assembly 400 is switched between the first installation position and the second installation position, it only needs to change the connection position between the nacelle cover 100 and the heat dissipation assembly 400 without adding additional connectors, thereby simplifying the installation operation process of the heat dissipation assembly 400, improving the installation efficiency of the heat dissipation assembly 400, and reducing the workload of operators installing the wind turbine generator. In addition, the specific structure of the bottom outlet structure of the wind turbine generator refers to the above-mentioned embodiments, and since the installation method of the bottom outlet structure of the wind turbine generator adopts all the technical solutions of all the above-mentioned embodiments, it at least has all the beneficial effects brought about by the technical solutions of the above-mentioned embodiments, which will not be described one by one here.

Finally, it should be noted that the above serial number of embodiments in the present application is only for description and does not represent the merits of embodiments. The above embodiments are only part of the present application and do not therefore limit the scope of the present application. Any equivalent structure or equivalent process transformation made by using the contents and drawings of the present application under the inventive concept of the present application, or directly or indirectly used in other relevant technical fields, are included in the scope of the present application.

## Claims

1. A bottom outlet structure of a wind turbine generator, **characterized by** comprising:
a nacelle cover (100), wherein a generator (300) of the wind turbine generator is installed in the nacelle cover (100) through a frame (200), a ventilation port (101) is formed at a bottom of the nacelle cover (100), a first installation position is formed at the ventilation port (101), an accommodation space (201) is formed between the frame (200) and the ventilation port (101), the accommodation space (201) is provided at intervals below the generator (300), a second installation position is formed on the nacelle cover (100), and the second installation position is accommodated in the accommodation space (201); and
a heat dissipation assembly (400) detachably connected to the first installation position or the second installation position.

2. The bottom outlet structure of the wind turbine generator according to claim 1, wherein the heat dissipation assembly (400) comprises a box body (410) and a noise reduction assembly (420), the box body (410) is detachably connected to the first installation position or the second installation position, the box body (410) is formed with a ventilated side and a noise reduction side, and the noise reduction assembly (420) is installed on the noise reduction side.

3. The bottom outlet structure of the wind turbine generator according to claim 2, wherein the box body (410) comprises a grid assembly (411) and a plate assembly (412), the grid assembly (411) and the plate assembly (412) are enclosed to form a heat dissipation cavity (413) with a top opening, the grid assembly (411) is configured to form the ventilated side, and the plate assembly (412) is configured to form the noise reduction side.

4. The bottom outlet structure of the wind turbine generator according to claim 3, wherein the grid assembly (411) comprises a plurality of shutters (401), the plate assembly (412) comprises a first plate (402) and a second plate (403), and the first plate (402) and the plurality of shutters (401) are enclosed along a circumference of the second plate (403) to form the heat dissipation cavity (413).

5. The bottom outlet structure of the wind turbine generator according to any one of claims
2 to 4, wherein an inner wall of the box body (410) is provided with a plurality of reinforcement ribs (500), and the plurality of reinforcement ribs (500) are crosswise.

6. The bottom outlet structure of the wind turbine generator according to any one of claims 2 to 4, wherein the noise reduction assembly (420) comprises a plurality of noise reduction layers (421) laid on the noise reduction side.

7. The bottom outlet structure of the wind turbine generator according to claim 1, wherein the heat dissipation assembly (400) comprises a shell (1) and a motor rotor (2), the shell (1) is formed with a heat dissipation duct (11), the motor rotor (2) comprises a rotating shaft (21) rotatably installed on the shell (1) and an iron core (22) fixedly installed on the rotating shaft (21), and the iron core (22) is provided on the heat dissipation duct (11); and
the heat dissipation duct (11) is formed with a wind outlet (12), and the wind outlet (12) is provided at a lower end of the shell (1) and corresponds to a side of the iron core (22), so that the airflow is configured to flow downward out of the heat dissipation duct (11).

8. The bottom outlet structure of the wind turbine generator according to claim 7, wherein the heat dissipation duct (11) is further formed with a first wind inlet (13), and the first wind inlet (13) is provided at an upper end of the shell (1) and corresponds to an end of the iron core (22), so that the airflow is configured to flow downward into the heat dissipation duct (11).

9. The bottom outlet structure of the wind turbine generator according to claim 8, wherein two first wind inlets (13) are provided corresponding to two ends of the iron core (22).

10. The bottom outlet structure of the wind turbine generator according to claim 9, wherein the heat dissipation assembly (400) further comprises a filter apparatus (3), and the filter apparatus (3) comprises:
a filter seat (31) comprising a seat body (311) and a separating plate (312), wherein the seat body (311) is fixedly installed on the upper end of the shell (1), the separating plate (312) is provided in the seat body (311) to form two filter channels with the seat body (311), outlets of the two filter channels are respectively communicated with the two first wind inlets (13), and inlets of the two filter channels are respectively provided on side walls of the seat body (311); and
a plurality of filters (32) respectively provided in the two filter channels.

11. The bottom outlet structure of the wind turbine generator according to claim 7, wherein the heat dissipation duct (11) is further formed with a second wind inlet (14), and the second wind inlet (14) is provided on a side wall of the shell (1) and corresponds to the end of the iron core (22), so that the airflow is configured to flow into the heat dissipation duct (11) along a radial direction of the motor rotor (2).

12. The bottom outlet structure of the wind turbine generator according to claim 7, wherein the heat dissipation assembly (400) further comprises two heat dissipation ports (15) provided at the lower end of the shell (1), and the two heat dissipation ports (15) respectively correspond to the two ends of the iron core (22).

13. The bottom outlet structure of the wind turbine generator according to claim 7, wherein the heat dissipation assembly (400) further comprises:
a nacelle (5), wherein an air outlet is provided at a lower end of the nacelle (5), and the shell (1) is provided in the nacelle (5); and
a communicating hose (6), wherein two ends of the communicating hose (6) are respectively communicated with the air outlet and the wind outlet (12).

14. The bottom outlet structure of the wind turbine generator according to claim 13, wherein the heat dissipation assembly (400) further comprises an elbow head (7) provided at the air outlet and configured for allowing the airflow to flow out in a horizontal direction.

15. A method for installing a bottom outlet structure of a wind turbine generator, applied to the bottom outlet structure of the wind turbine generator according to any one of claims 1 to 14, **characterized by** comprising:
S10, placing a heat dissipation assembly in an accommodation space, and detachably connecting the heat dissipation assembly to a second installation position;
S20, transporting a nacelle cover to a preset location;
S30, removing the heat dissipation assembly from the second installation position, and installing the heat dissipation assembly to a first installation position; and
S40, passing an air duct through a ventilation port, and communicating an exhaust end of a generator with the heat dissipation assembly through the air duct to complete an installation.
